# EUROPÄISCHE PATENTSCHRIFT

(11) **EP 1 689 047 B1**
(45) Veröffentlichungstag und Bekanntmachung des Hinweises auf die Patenterteilung: **23.02.2011**
(21) Anmeldenummer: 06001373.7
(22) Anmeldetag: 24.01.2006
(51) Int. Cl.: H01R 13/66, F42B 3/182, H01R 13/703

(54) **Kontaktsicherung für Steckverbinder mit einer Kurzschlussbrücke mit integriertem Schaltelement**
Security contact for connector with a shorter bridge with integral switch element
Contact de sécurité pour connecteur avec un pont de court-circuit avec élément de commutation intégral

(30) Priorität: 02.02.2005 DE 102005004920
(43) Veröffentlichungstag der Anmeldung: 09.08.2006
(73) Patentinhaber: Amphenol-Tuchel Electronics GmbH, 74080 Heilbronn (DE)
(72) Erfinder: Müller, Hans-Ulrich, 74629 Pfedelbach (DE); Annecke, Alfred, 74080 Heilbronn (DE)
(74) Vertreter: Schweiger, Johannes

(56) Entgegenhaltungen:
- EP-A- 1 043 201
- EP-A- 1 073 160
- WO-A-99/36293
- DE-A- 19 935 970
- US-A1- 2002 009 924
- US-B1- 6 220 163

## Beschreibung

Die vorliegende Erfindung betrifft eine Kontaktsicherung für elektrische Steckverbinder, die zur Verwendung zwischen einer Zündpille für Airbags und einem Steuergerät eines Kraftfahrzeuges geeignet ist.

Elektrische Steckverbinder mit solchen Zündpillen sind beispielsweise in der DE 102 27 016 A1 offenbart, wobei der elektrische Steckverbinder meist aus einem L-förmigen Gehäuse mit einem Rüssel besteht, der in die in der Zündpille vorgesehene Kontaktsicherung gesteckt wird. Die teilweise komplexen elektrischen Steckverbinder, die häufig mit einer Primär- und Sekundärverriegelung versehen sind, sollen möglichst geringe Abmessungen bei höchstmöglicher Funktionssicherheit aufweisen.

Durch das zunehmende Eindringen der Elektronik in Kraftfahrzeuge wachsen auch die Probleme ihrer gegenseitigen Beeinflussung. Die besonderen Probleme liegen hier darin, dass auf engstem Raum die unterschiedlichsten elektronischen Einheiten untergebracht sind und ordnungsgemäß arbeiten müssen.

Es sind sowohl empfindliche analoge Geräte (z.B. Rundfunkempfänger, Telefone, Funkanlagen) als auch digitale Einheiten (z.B. Einspritz- und Zündzeitpunkt-Steuerungen, ABS-Steuerungen, Verbrennungsgemisch-Steuerungen [λ-Sonde], Bordcomputer) wie auch Motorantriebe und Steuerungsventile (z.B. Lichtmaschine, Anlasser, Fensterheber, Scheibenwischer, Benzinpumpe, Bremsventile [ABS]) sowie die störungsträchtige Zündanlage, die hier auf engstem Raume nebeneinander arbeiten sollen. Daneben werden sowohl die Arbeitsgeschwindigkeit der Funktionselemente (Bandbreite) als auch die Dichte der Funktionsbausteine immer höher. Es verlaufen empfindliche Fühlerleitungen und Leitungen für stromstarke Stellmotorantriebe über längere Strecken dicht zusammen. Bei dieser Funktionsvielfalt kann eine Fehlsteuerung durch gegenseitige Beeinflussung (z.B. des Bremssystems oder des Airbags) verheerende Folgen haben. Hier ist eine besondere Sorgfalt bei der Beherrschung der gegenseitigen Beeinflussungen geboten.

Solche Kontaktsicherungen sind in der WO 99/36293 A sowie der EP-A-1 073 160 und DE 199 35 970 A gezeigt.

Es ist daher die Aufgabe der vorliegenden Erfindung, eine Kontaktsicherung für Steckverbinder so auszugestalten, dass Fehlauslösungen des Airbags möglichst vermieden werden.

Grundidee der vorliegenden Erfindung ist es dabei, eine Schutzeinrichtung zur Sicherung von Zündkontakten der Zündpille gegen Störeinflüsse in der Kontaktsicherung vorzusehen, wobei die Schutzeinrichtung mit einer Kurzschlussbrücke derart in Kontakt steht, dass bei/nach Trennung der Kurzschlussbrücke automatisch die Schutzeinrichtung wirksam wird.

Ein weiterer wesentlicher Aspekt der Erfindung liegt in der Anordnung der Schutzeinrichtung außerhalb des Anzünders, insbesondere im Isolierring.

Als Schutzeinrichtung können beispielsweise Varistoren eingesetzt werden. Varistoren sind spannungsabhängige Widerstände mit symmetrischer U/I-Kennlinie. Der Widerstand des Varistors sinkt mit zunehmender Spannung. Parallel zum schützenden Bauteil bzw. Schaltung geschaltet, bildet der Varistor bei zunehmender Spannung einen niederohmigen Shunt und verhindert so ein weiteres Ansteigen der Überspannung.

In einer allgemeinen Ausführungsform betrifft die vorliegende Erfindung daher eine Kontaktsicherung nach Anspruch 1.

Gemäß einer Ausgestaltung der Erfindung ist die Schutzeinrichtung in dem Isolierring integriert ausgebildet.

Die Kurzschlussbrücke kann beispielsweise aus zwei Schutzkontaktfedern bestehen, wobei jede Schutzkontaktfeder einem Zündkontakt der Zündpille zugeordnet ist und zwischen den Kontaktfedern ein Schutzelement, beispielsweise ein Varistor, den Kontakt herstellt, sobald der Steckverbinder vollständig montiert ist.

Der Varistor, der aus unter bestimmten Bedingungen gesintertem Zinkoxid zusammen mit anderen Metallkeramiken besteht, weist eine polykristalline Keramik mit vorhersagbarer Spannungsabhängigkeit auf.

Durch die Anordnung der Schutzeinrichtung, die ein ESD und/oder EMV-Schutzelement enthalten kann, in dem Isolierring, sind keine baulichen Änderungen am Anzünder selbst notwendig. Weiterhin ändert sich an der Montage nichts, da auf bekannte Bauteile zurückgegriffen werden kann. Auch bisherige Montagevorrichtungen können somit weiter verwendet werden.

Die beiden leitenden Schutzkontaktfedern können in vorteilhafter Ausgestaltung spiegelsymmetrisch oder auch baugleich ausgestaltet sein, wodurch die Produktionskosten weiter gesenkt werden.

Die Verbindung der Schutzeinrichtung mit den leitenden Bauteilen kann durch Stecken oder durch einfache Anlage erfolgen. Auch andere leitende Verbindungen wie beispielsweise Verklemmen oder Verschrauben sind denkbar, wobei eine leichte Montage und Platz sparende Unterbringung die oberste Prämisse darstellen.

Weitere Ausgestaltungen der Erfindung ergeben sich aus der Figurenbeschreibung und den Ansprüchen, wobei jede mögliche Kombination der Patentansprüche Gegenstand der Erfindung ist.

Die Figuren der Zeichnungen zeigen unter Beibehaltung gleicher Bezugszeichen für gleiche Bauteile im Einzelnen:
- Fig. 1a bis 1d:: Verschiedene Ansichten einer erfindungsgemäßen Ausgestaltung der Kontaktsicherung/der Kurzschlussbrücke in einem Vormontagezustand des Steckverbinders bzw. einer Kontaktstellung der Kurzschlussbrücke;
- Fig. 1a:: Perspektivische Ansicht der erfindungsgemäßen Kontaktsicherung von unten (aus Sicht des Steckers);
- Fig. 1b:: Perspektivische Ansicht der erfindungsgemäßen Kontaktsicherung von oben (aus Sicht des Anzünders);
- Fig. 1c:: Perspektivische Ansicht der Kurzschlussbrücke;
- Fig. 1d:: Aufsicht auf die erfindungsgemäße Kontaktsicherung von oben (aus Sicht des Anzünders);
- Fig. 2a bis 2d:: Verschiedene Ansichten einer erfindungsgemäßen Ausgestaltung der Kontaktsicherung/der Kurzschlussbrücke in einem Steckzustand des Steckverbinders bzw. einer Trennstellung der Kurzschlussbrücke;

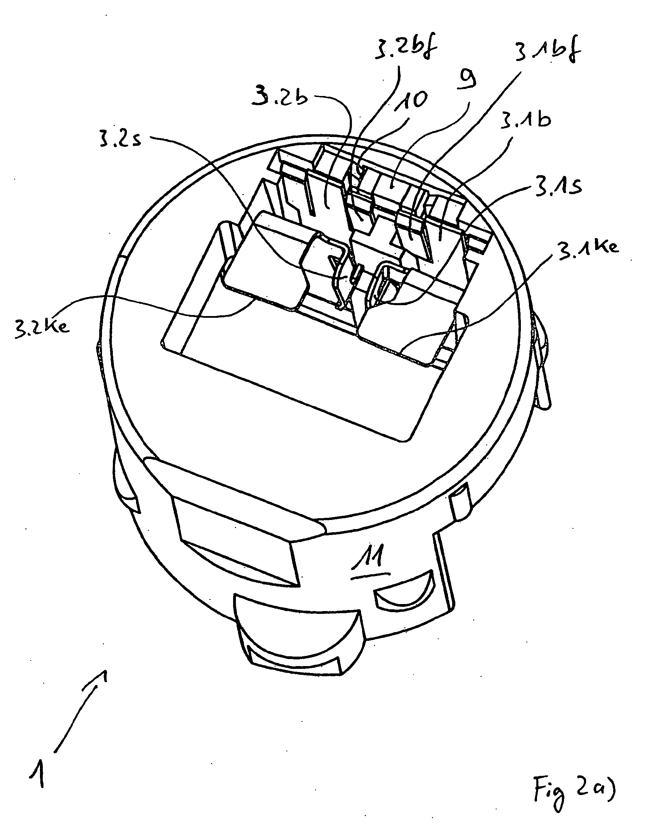

- Fig. 2a:: Perspektivische Ansicht der erfindungsgemäßen Kontaktsicherung von unten (aus Sicht des Steckers);

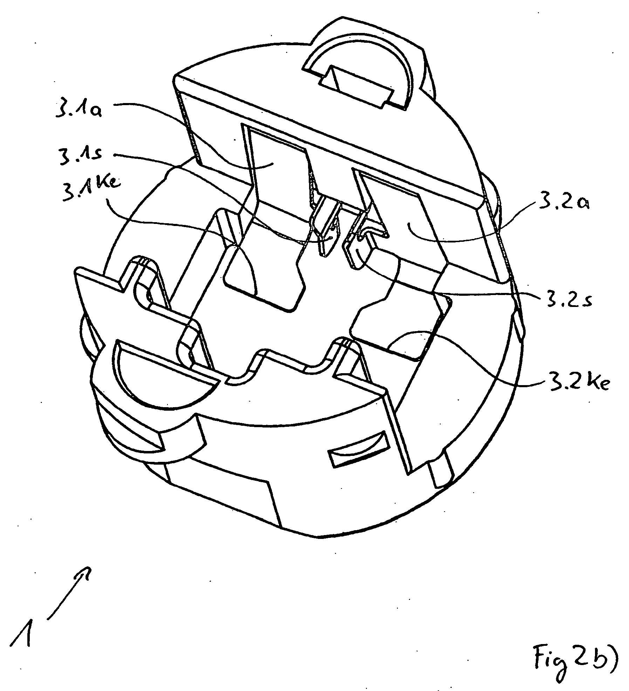

- Fig. 2b:: Perspektivische Ansicht der erfindungsgemäßen Kontaktsicherung von oben (aus Sicht des Anzünders);

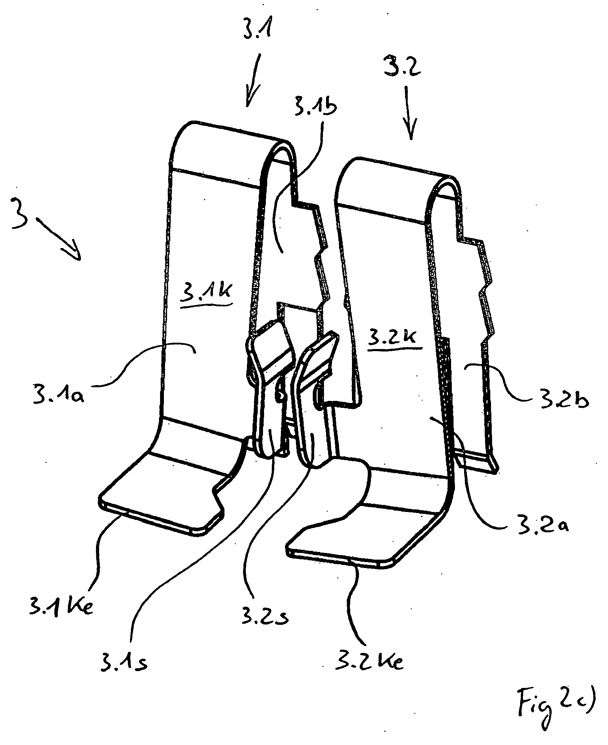

- Fig. 2c:: Perspektivische Ansicht der Kurzschlussbrücke;

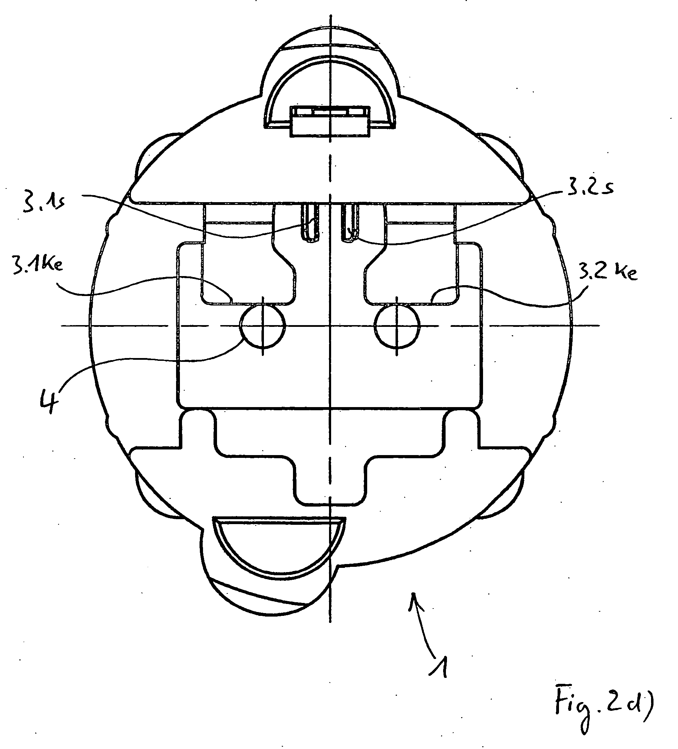

- Fig. 2d:: Aufsicht auf die erfindungsgemäße Kontaktsicherung von oben (aus Sicht des Anzünders).

In den Figuren sind Zündpille, Steckverbinder sowie Verriegelungselemente nicht oder nur unvollständig dargestellt und diese werden als bekannt vorausgesetzt. In den hier beschriebenen Ausführungsbeispielen sind die äußeren Abmessungen der Kontaktsicherung im Wesentlichen identisch. Diese können jedoch auch an jede andere geometrische Form von Zündpillen/Steckverbindern angepasst sein/werden. Teilweise dargestellte Verrastungselemente werden ebenfalls nicht näher erläutert. Die Darstellung erfolgt zur besseren Erkennbarkeit stark vergrößert.

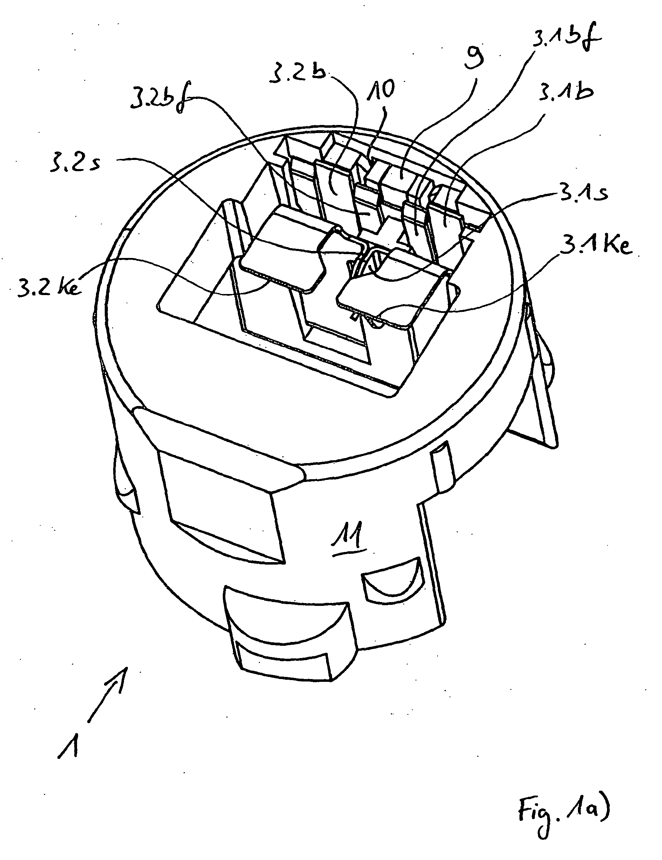

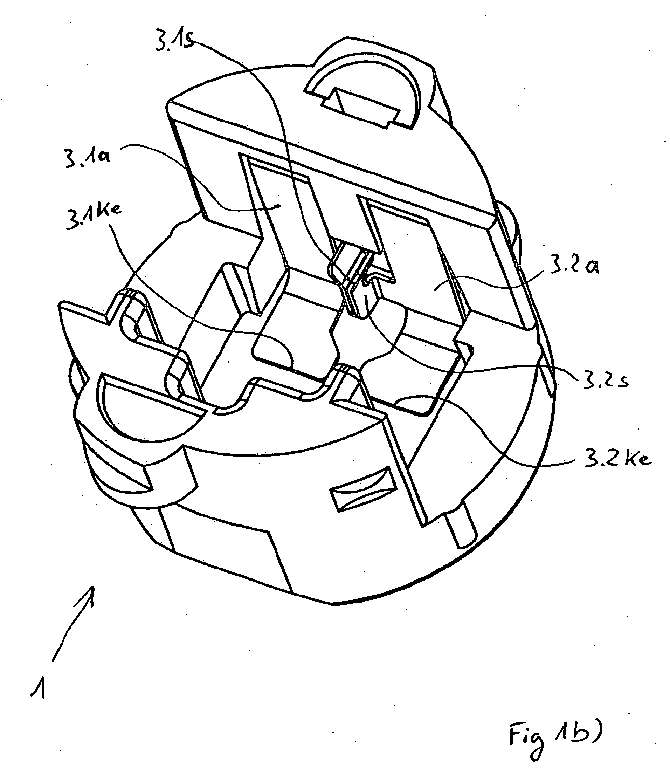

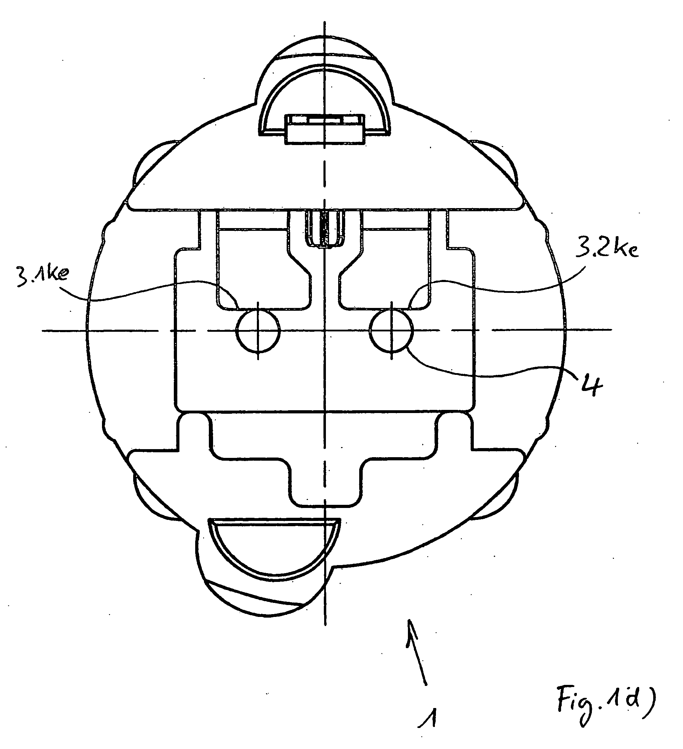

Die Figuren 1a, 1b und 1d zeigen eine Kontaktsicherung 1 mit einer integrierten Kurzschlussbrücke 3 in einem Vormontagezustand des Steckverbinders bzw. einer Kontaktstellung der Kurschlussbrücke 3. In Fig. 1d ist gezeigt, dass eine Kontaktfeder 4 eines Anzünders (nicht dargestellt) mit einem Schutzkontaktfederende 3.1ke und eine weitere Kontaktfeder 4 des Anzünders mit einem Schutzkontaktfederende 3.2ke in Kontakt steht, wobei die zu je einer Schutzkontaktfeder 3.1k/3.2k gehörenden Schutzkontaktfederenden 3.1ke/3.2ke über je ein an der Schutzkontaktfeder 3.1k/3.2k angeformtes Schaltelement 3.1s/3.2s verbunden sind. Hierdurch ergibt sich eine Kurzschlussschaltung zwischen den beiden Kontaktfedern 4 des Anzünders über die hier als Schutzkontaktfedern 3.1k/3.2k ausgebildeten Leitelemente 3.1/3.2 der Kurzschlussbrücke 3.

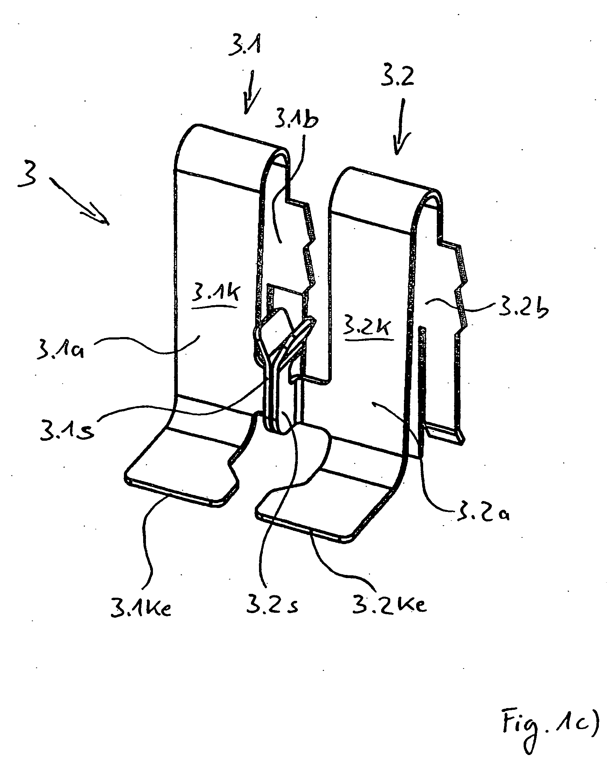

Zur Veranschaulichung der hier vorgesehenen geometrischen Form der Kurzschlussbrücke ist diese in Fig. 1c freigestellt. Die beiden an einer imaginären Achse gespiegelten Leitelemente 3.1/3.2 stehen - wie gesagt - an zwei Kontaktflächen der Schaltelemente 3.1s/3.2s in Kontakt. Die Schaltelemente 3.1s/3.2s sind jeweils an einem Kontaktschenkel 3.1a/3.2a der jeweiligen Schutzkontaktfedern 3.1k/3.2k einstückig angewinkelt.

Die U-förmigen Schutzkontaktfedern 3.1k/3.2k, gebildet aus den beiden Kontaktschenkeln 3.1a/3.2a und zweiten Schenkeln 3.1b/3.2b, erstrecken sich im Wesentlichen entlang der Steckrichtung des Steckverbinders bzw. im Wesentlichen parallel zu den Kontaktfedern 4 des Anzünders. Um einen Abstand zu den Kontaktfedern 4 zu wahren und dennoch Kontakt herzustellen, sind an den Kontaktschenkeln 3.1a/3.2a Schutzkontaktfederenden 3.1ke/3.2ke in Richtung der Kontaktfedern 4 angewinkelt und stehen durch die Federvorspannung der Schutzkontaktfedern 3.1k/3.2k in ständigem Kontakt mit den Kontaktfedern 4 des Anzünders, sofern die Kontaktsicherung 1 in dem Anzünderträger eingesetzt ist.

In Fig. 1a ist eine Schutzeinrichtung 9 zu erkennen, die hier als Varistor mit den zweiten Schenkeln 3.1b/3.2b über an den zweiten Schenkeln 3.1b/3.2b angeformte Federlaschen 3.1bf/3.2bf in Kontakt steht. Die Schutzeinrichtung 9 ist in einer Tasche 10 des Isolierringes 11 der Kontaktsicherung 1 untergebracht und wird durch die Federkraft der angewinkelten Federlaschen 3.1bf/3.2bf in der Tasche 10 gehalten.

Die Schutzeinrichtung 9 befindet sich sowohl im Steckzustand als auch im Vormontagezustand des Steckverbinders und sowohl in der Kontaktstellung als auch in der Trennstellung der Kurzschlussbrücke in ständigem Kontakt mit den Federlaschen 3.1bf/3.2bf. Sobald die in Fig. 2a bis 2d dargestellte Trennstellung der Schaltelemente 3.1s/3.2s vorliegt, befinden sich die beiden Leitelemente 3.1/3.2 nur noch über die Schutzeinrichtung 9 in leitendem Kontakt.

Die Trennung der Leitelemente 3.1/3.2 erfolgt hier durch einen nicht dargestellten Aktuator im Stecker, der zwischen die Y-förmig ausgestalteten Schaltelemente 3.1s/3.2s gesteckt wird, wenn der Steckzustand des elektrischen Steckverbinders erreicht ist. Hierdurch werden die Kontaktflächen der Schaltelemente 3.1s/3.2s getrennt und die einzige Verbindung der Leitelemente 3.1/3.2 besteht in dem Varistor.

In den Figuren 1d und 2d ist zu erkennen, dass die Schutzkontaktfederenden 3.1ke/3.2ke dabei lediglich an den Kontaktfedern 4 entlang verschoben werden und in ständigem Kontakt mit den Kontaktfedern 4 stehen.

### Bezugszeichenliste

- 1: Kontaktsicherung
- 3: Kurzschlussbrücke
- 3.1: Leitelement
- 3.2: Leitelement
- 3.1 a: Kontaktschenkel
- 3.1b: zweiter Schenkel
- 3.2a: Kontaktschenkel
- 3.2b: zweiter Schenkel
- 3.1bf: Federlasche
- 3.2bf: Federlasche
- 3.1s s: Schaltelement
- 3.2s: Schaltelement
- 3.1k: Schutzkontaktfeder
- 3.2k: Schutzkontaktfeder
- 3.1ke: Schutzkontaktfederenden
- 3.2ke: Schutzkontaktfederenden
- 4: Kontaktfeder
- 9: Schutzeinrichtung
- 10: Tasche
- 11: Isolierring

## Patentansprüche

1. Kontaktsicherung (1) für elektrische Steckverbinder mit einem Steckzustand und einem Vormontagezustand, geeignet zur Verwendung zwischen einer Zündpille für Airbags und einem Steuergerät eines Kraftfahrzeuges mit folgenden Merkmalen:
- einem Isolierring (11),
- einer in den Isolierring (11) integrierbaren Kurzschlussbrücke (3) zur Überbrückung von Kontaktfedern (4) der Zündpille im Vormontagezustand des Steckverbinders, wobei die Kurzschlussbrücke (3) aus zwei einander zugeordneten, trennbaren Leitelementen (3.1, 3.2) besteht, wobei
- die Leitelemente (3.1, 3.2) jeweils ein Schaltelement (3.1s, 3.2s) mit einer Kontaktstellung und einer Trennstellung aufweisen, wobei mindestens ein Schaltelement (3.1s, 3.2s) so ausgestaltet ist, dass die Leitelemente (3.1, 3.2) bei Erreichen des Steckzustands des Steckverbinders von der Kontaktstellung in die voneinander getrennte Stellung übergehen, und dass eine Schutzeinrichtung (9) gegen Störeinflüsse vorgesehen ist, die beide Leitelemente (3.1, 3.2) zumindest im Steckzustand kontaktiert,
**dadurch gekennzeichnet, dass**
die Leitelemente (3.1, 3.2) voneinander trennbar sind.

2. Kontaktsicherung gemäß Anspruch 1, bei der die Kurzschlussbrücke (3) in dem Isolierring (11) integriert ist.

3. Kontaktsicherung nach Anspruch 1, bei der die Leitelemente (3.1, 3.2) als Schutzkontaktfedern (3.1k, 3.2k) ausgebildet sind, wobei die Schutzkontaktfedern (3.1k, 3.2k) mit ihren Schutzkontaktfederenden (3.1ke, 3.2ke) jeweils die Kontaktfedern (4) kontaktieren.

4. Kontaktsicherung nach Anspruch 1, bei der die Leitelemente (3.1, 3.2) im wesentlichen achsensymetrisch zueinander sind.

5. Kontaktsicherung nach Anspruch 1, bei der die Schutzeinrichtung (9) eine Wirkverbindung zwischen den Schutzkontaktfedern (3.1k, 3.2k) herstellt.

6. Kontaktsicherung nach Anspruch 1, bei der die Schutzeinrichtung (9) ein Varistor ist.

7. Kontaktsicherung nach Anspruch 1, bei der die Leitelemente (3.1, 3.2) dauerhaft mit der jeweils zugeordneten Kontaktfeder (4) in Kontakt stehen.

8. Kontaktsicherung nach Anspruch 1, bei der die Leitelemente (3.1, 3.2) jeweils U-förmig ausgestaltet sind und je ein Kontaktschenkel (3.1a, 3.2a) jedes Leitelements (3.1, 3.2) zu den Kontaktfedern (4) hin abgewinkelt ist.

9. Kontaktsicherung nach Anspruch 1, bei der zweite Schenkel (3.1b, 3.2b) jedes Leitelements (3.1, 3.2) jeweils mit der Schutzeinrichtung (9) in Kontakt stehen.

10. Kontaktsicherung nach Anspruch 1, bei der die Schutzeinrichtung (9) parallel zu den Kontaktfedern (4) geschaltet ist.

11. Kontaktsicherung nach Anspruch 1, bei der die Schutzeinrichtung (9) dauerhaft mit den Leitelementen (3.1/3.2) in Kontakt steht.

12. Steckverbinder mit Kontaktsicherung nach einem der vorhergehenden Ansprüche.

## Claims

1. Contact safety device (1) for electrical pin-and-socket connectors with an inserted state and a preassembled state, which is suited for use between a primer for airbags and a control device of a motor vehicle, said contact safety device (1) comprising:
- an insolating ring (11);
- a shorting bar (3) which can be integrated into the isolating ring (11) to short out contact springs (4) of the primer when the pin-and-socket connector is in the preassembled state, wherein the shorting bar (3) contains two separable conducting elements (3.1, 3.2) relating to each other,
wherein the conducting elements (3.1, 3.2) have a circuit element (3.1s, 3.2s) each with a contact position and a separated position, wherein at least one circuit element (3.1 s, 3.2s) is designed in such a way that the conducting elements (3.1, 3.2) change from the contact position to the position separate from each other when the pin-and-socket connector attains its inserted state, and that
- a contact safety device (9) against interference is provided which contacts both circuit elements (3.1, 3.2) at least in the inserted state,
**characterized in that**,
the conducting elements (3.1, 3.2) can be separated from each other.

2. Contact safety device according to claim 1 in which the shorting bar (3) is integrated into the isolating ring (11).

3. Contact safety device according to claim 1 in which the circuit elements (3.1, 3.2) are designed as protective contact springs (3.1 k, 3.2k), whereby the protective contact springs (3.1 k, 3.2k) in each case contact the contact springs (4) with their protective contact spring end (3.1ke, 3.2ke).

4. Contact safety device according to claim 1 in which the circuit elements (3.1, 3.2) are essentially mirror symmetric to each other.

5. Contact safety device according to claim 1 in which the contact safety device (9) produces a working connection between the protective contact springs (3.1k, 3.2k).

6. Contact safety device according to claim 1 in which the safety mechanism (9) is a varistor.

7. Contact safety device according to claim 1 in which the circuit elements (3.1, 3.2) are permanently in contact with the contact spring (4) that corresponds to each of them.

8. Contact safety device according to claim 1 in which the circuit elements (3.1, 3.2) are each shaped as a U and in each case a contact arm (3.1a, 3.2a) of each circuit element (3.1, 3.2) is brought on at a right angle to the contact springs (4).

9. Contact safety device according to claim 1 in which the second arms (3.1b, 3.2b) of each circuit element (3.1, 3.2) are each in contact with the safety mechanism (9).

10. Contact safety device according to claim 1 in which the safety mechanism (9) is connected parallel to the contact springs (4).

11. Contact safety device according to claim 1 in which the safety mechanism (9) is permanently in contact with the circuit elements (3.1/3.2).

12. Pin-and-socket connector with a contact safety device according to claim 1.

## Revendications

1. Sécurité de contact (1) pour connecteurs électriques comprenant un état d'enfichage et un état de prémontage, appropriée pour être utilisée entre une amorce pour airbags et un appareil de commande d'un véhicule automobile avec les caractéristiques suivantes :
- une bague isolante (11),
- un pont de court-circuit (3) pouvant être intégré dans la bague isolante (11) pour le shuntage de ressorts de contact (4) de l'amorce dans l'état de prémontage du connecteur, le pont de court-circuit (3) étant constitué de deux éléments conducteurs (3.1, 3.2) associés l'un à l'autre et séparables,
les éléments conducteurs (3.1, 3.2) présentant chacun un élément de commutation (3.1s, 3.2s) avec une position de contact et une position de séparation, au moins un élément de commutation (3.1s, 3.2s) étant conçu de telle sorte que les éléments conducteurs (3.1, 3.2) passent de la position de contact dans la position séparée de la première lorsqu'on atteint l'état d'enfichage du connecteur, et en ce qu'un dispositif de protection (9) contre les influences parasites est prévu, lequel met en contact les deux éléments conducteurs (3.1, 3.2) au moins dans l'état d'enfichage,
**caractérisée en ce que** les éléments conducteurs (3.1, 3.2) peuvent être séparés l'un de l'autre.

2. Sécurité de contact selon la revendication 1, sur laquelle le pont de court-circuit (3) est intégré dans la bague isolante (11).

3. Sécurité de contact selon la revendication 1, sur laquelle les éléments conducteurs (3.1, 3.2) sont conçus sous forme de ressorts à contact de protection (3.1k, 3.2k), les ressorts à contact de protection (3.1k, 3.2k) mettant à chaque fois en contact les ressorts à contact (4) avec leurs extrémités de ressort à contact de protection (3.1ke, 3.2ke).

4. Sécurité de contact selon la revendication 1, sur laquelle les éléments conducteurs (3.1, 3.2) sont sensiblement symétriques les uns par rapport aux autres.

5. Sécurité de contact selon la revendication 1, sur laquelle le dispositif de protection (9) établit une liaison active entre les ressorts à contact de protection (3.1k, 3.2k).

6. Sécurité de contact selon la revendication 1, sur laquelle le dispositif de protection (9) est un varistor.

7. Sécurité de contact selon la revendication 1, sur laquelle les éléments conducteurs (3.1, 3.2) sont en contact en permanence avec le ressort de contact (4) respectivement associé.

8. Sécurité de contact selon la revendication 1, sur laquelle les éléments conducteurs (3.1, 3.2) sont conçus respectivement en U et à chaque fois une branche de contact (3.1a, 3.2a) de chaque élément conducteur (3.1, 3.2) est coudée en direction des ressorts à contact (4).

9. Sécurité de contact selon la revendication 1, sur laquelle des secondes branches (3.1b, 3.2b) de chaque élément conducteur (3.1, 3.2) sont en contact respectivement avec le dispositif de protection (9).

10. Sécurité de contact selon la revendication 1, sur laquelle le dispositif de protection (9) est branché parallèlement aux ressorts de contact (4).

11. Sécurité de contact selon la revendication 1, sur laquelle le dispositif de protection (9) est en contact en permanence avec les éléments conducteurs (3.1/3.2).

12. Connecteur avec sécurité de contact selon l'une quelconque des revendications précédentes.
